# EUROPEAN PATENT SPECIFICATION

(11) **EP 3 173 276 B1**
(45) Date of publication and mention of the grant of the patent: **20.06.2018**
(21) Application number: 16200489.9
(22) Date of filing: 24.11.2016
(51) Int. Cl.: B60K 13/04

(54) **VEHICLE BODY STRUCTURE**
FAHRZEUGAUFBAUSTRUKTUR
CARROSSERIE DE VÉHICULE

(30) Priority: 24.11.2015 JP 2015228356
(43) Date of publication of application: 31.05.2017
(73) Proprietor: MITSUBISHI JIDOSHA KOGYO KABUSHIKI KAISHA, Minato-ku Tokyo 108-8410 (JP)
(72) Inventor: ITAYA, Daisuke, Tokyo 108-8410 (JP); KOJIMA, Hisashi, Tokyo 108-8410 (JP)
(74) Representative: Regimbeau

(56) References cited:
- EP-A1- 0 115 644
- DE-A1- 3 341 203
- DE-A1-102012 005 838
- DE-U1-202014 005 799
- FR-A1- 2 982 537
- US-A1- 2004 142 232

## Description

### FIELD

The present invention relates to a vehicle body structure equipped with a tank of additive for exhaust purification.

### BACKGROUND

Conventionally, in vehicles equipped with an exhaust purification system for reducing and purifying the exhaust gas components, a vehicle equipped with a tank of the additive having a reduction action on the purification target substance has been known. If the purification target substance is nitrogen oxides (NOx), additive such as aqueous urea solution or aqueous ammonia solution is stored inside the tank. Further, the arrangement position of the tank, for example, is suggested to be set on a vehicle body bottom as an external space of a vehicle interior or the inside of the body panel (for example, the inner side of an outer panel). By the layouts, a dead space can be effectively used (see JP 4826612 B1 and JP 4924352 B1, JP 5194543 B1 and JP 2008-273372 A). Generic document FR 2982537 A1, DE 202014005799 U1, DE 102012005838 A1, US 2004/142232 A1, DE 3341203 A1, and EP 0115644 A1 also disclose a structure including a container or piping used for a vehicle.

In the conventional exhaust purification system, many water injection ports for replenishing urea water to the tank are provided in the vicinity of the tank so that an injection path becomes shorter. For example, when the tank is disposed on the vehicle body bottom, the water injection port may be disposed on the floor surface above the tank (see JP 4826612 B1 and JP 4924352 B1). Further, when the tank is disposed inside the body panel, the water injection port may be provided in the body panel (see JP 2008-273372 A). However, as the distance between the tank and the water injection port becomes shorter, an operator is liable to be exposed to the vapor of the additive (gas component that is naturally evaporated in the tank) during replenishing operation, and it is difficult to comfortably perform the replenishing operation. Meanwhile, as the water injection pipe is lengthened, the average slope of the water injection path decreases. Thus, it is not possible to rapidly replenish the aqueous urea solution, and the workability is lowered.

### SUMMARY

### TECHNICAL PROBLEMS

The present invention has been made in view of the aforementioned problems, and an object thereof is to provide a vehicle body structure capable of improving the workability at the time of injection of additive to the tank, while saving the space. Further, without being limited to this object, another object of the present invention is to obtain the function and effect that cannot be obtained by conventional techniques as a function and effect derived from each configuration illustrated in "DESCRIPTION OF EMBODIMENTS" to be described later.

### SOLUTION TO PROBLEMS

According to the present invention, a vehicle body structure as defined by the accompanying claims is provided.

The present application also discloses the following aspects (1) to (7).
(1) A vehicle body structure disclosed herein is equipped with gate that is erected along a periphery of a platform placed on a frame of a vehicle. Further, the vehicle body structure is equipped with a tank that is disposed below a floor surface of the platform and stores an additive for purification of exhaust from the vehicle. Further, the vehicle body structure is equipped with a water injection port that is provided on a side surface of the gate and is connected in a state of communicating with the interior of the tank.
(2) The water injection port is preferably characterized in that the side surface (32, 33) where the water injection port (4) is provided is a side surface facing the inside of the platform in the gate (1, 2). That is, the water injection port is preferably provided on a surface facing the inside of the platform, of the surface of the gate.
(3) The vehicle body structure is preferably equipped with a water injection pipe that is routed in the interior of the gate to connect the water injection port and the tank. In this case, the gate is provided to freely swing with respect to the floor surface of the platform, and the water injection pipe has a universal joint (a bent section) that is bent in accordance with the swinging of the gate.
(4) The vehicle body structure is preferably equipped with an angle adjusting mechanism that holds a swinging angle of the gate.
(5) The water injection pipe is preferably routed in the interior of the gate so as to be inclined toward the outside of the vehicle as the water injection pipe (5) extends from the water injection port to a downstream side of the water injection pipe, in an erected posture of the gate.
(6) The gate is preferably a rear gate located at the rear of the vehicle.
(7) Alternatively, the gate is preferably a side gate located on the side of the vehicle.

### ADVANTAGEOUS EFFECTS

It is possible to improve the workability at the time of injection of additive to the tank, while saving the space of the vehicle.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:
Fig. 1 is a perspective view of a vehicle to which a vehicle body structure of the present embodiment is applied.
Fig. 2 is a bottom view illustrating the vehicle body structure.
Fig. 3 is a top view illustrating the vehicle body structure from the top.
Fig. 4 is a rear view (a view taken from an arrow A of Fig. 3) of the vehicle body structure.
Fig. 5 is a cross-sectional view (a cross-sectional view taken from a line B-B of Fig. 3) of the vehicle body structure.
Fig. 6 is a perspective view of a vehicle illustrating a modified example.

### DESCRIPTION OF EMBODIMENTS

A vehicle body structure according to an embodiment will be described with reference to the accompanying drawings. The embodiment described below is merely an example and is not intended to exclude various modifications and applications of techniques that have not been described in the following embodiment. Each configuration of the present embodiment can be embodied by various modifications without departing from the spirit. In addition, each configuration may be selected if necessary or may be appropriately combined.

### [1. Configuration]

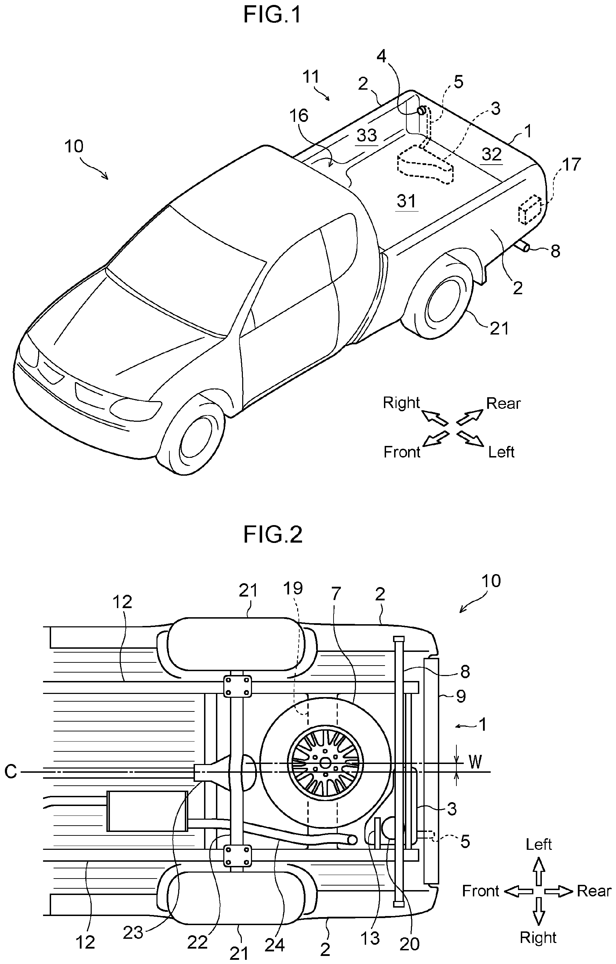

The vehicle body structure of the present embodiment is applied to a vehicle 10 illustrated in Fig. 1. The vehicle 10 is a pick-up truck type SUV (Sport Utility Vehicle) equipped with a urea SCR (Selective Catalytic Reduction) system. As the body structure of the vehicle 10, a separate frame structure in which the frame and the vehicle body are separated is employed. On the front side of the vehicle 10 on the frame, a box-like cab (vehicle interior) on which an occupant gets is disposed, and a platform 11 is disposed on the rear side thereof. Wheel houses 16 of rear wheels 21 are formed to bulge on a floor surface 31 of the platform 11.

The vehicle 10 is ordinarily equipped with a tank 3 that stores an additive for exhaust purification (for example, an aqueous urea solution, aqueous ammonia solution or the like). The urea SCR system is a kind of exhaust purification systems for purifying nitrogen oxide (NOx) contained in the exhaust gas of the engine. In the urea SCR system of the present embodiment, the aqueous urea solution is injected (sprayed) to the upstream side of a NOx selective reduction catalyst interposed on an exhaust passage, and NOx is reduced to nitrogen on the catalyst, using ammonia generated by the hydrolysis of urea as a reducing agent. This kind of the urea SCR system is widely used in vehicles, working machines, vessels and power plants equipped with a diesel engine or a lean-burn engine.

The vehicle 10 is provided with a pair of side members 12 which functions as a frame. The side members 12 are hollow tubular structural members which are disposed at intervals in a vehicle width direction (a left-right direction), and extends in a vehicle length direction (a front-rear direction) of the vehicle 10. An arrangement direction of the side members 12 is substantially horizontal. The cab (vehicle interior) of the vehicle 10 is mounted on the side members 12 via a vibration damping mount member, and the platform 11 is mounted on the top of the side member 12 in a state of being rigidly connected thereto.

A spare tire 7, a guard bar 8, a bumper 9, and the tank 3 are provided below the floor surface 31 of the platform 11. The spare tire 7 is fixed to a spare tire bracket 19 disposed behind (at the rear of) an axle 22 of the rear wheels 21 so as to be attachable and detachable via a fixture. The spare tire bracket 19 is a member that is attached to extend between the left and right side members 12.

A position in the front-rear direction of the spare tire 7 is set at a position on the front side of the vehicle 10 as much as possible, within a range that does not interfere with the axle 22 and a differential unit 23 of the rear wheels 21. Further, the position in the left-right direction of the spare tire 7 is set so that a predetermined interval is secured with respect to the exhaust pipe 24. Fig. 2 illustrates the vehicle 10 in which the exhaust pipe 24 is disposed to be biased to the right side (lower side in Fig. 2) from a vehicle body center line C, and the spare tire 7 is disposed to be biased to the left side (upper side in Fig. 2) from the vehicle body center line C by a dimension W.

The guard bar 8 is a member that extends substantially horizontally toward the left-right direction behind (at the rear of) the spare tire 7, and is firmly fixed to each of the left and right side members 12 via a guard bar bracket 18. The main role of the guard bar 8 is to prevent the penetration into the vehicle body bottom, while absorbing the impact force at the time of contact or collision with another vehicle or an obstacle. Therefore, the guard bar 8 is preferably disposed at a position closer to the rear end of the vehicle 10. In the example illustrated in Fig. 2, the guard bar 8 is disposed slightly in front of the bumper 9 attached to the rear end of the platform 11. Each of the both left and right ends of the guard bar 8 is stretched to the outside of the pair of side members 12 so that almost the entire rear end of the vehicle 10 is protected. As a result, almost the entire rear end of the vehicle 10 is protected by the guard bar 8. Further, the guard bar 8 is located slightly below the bottom surface of the bumper 9.

The tank 3 is a hollow container that stores the aqueous urea solution, and is supported by the side members 12 via the tank bracket 13. As illustrated in Figs. 1 to 5, the tank 3 is disposed in the upper space of the guard bar 8, behind (at the rear of) the spare tire 7 and in front of the bumper 9. Furthermore, since the spare tire 7 is disposed to be biased to the left side of the vehicle body center line C, a relatively open space is generated on the rear right side of the spare tire 7. Thus, the tank 3 is disposed to be biased to the right side of the vehicle body center line C. The shape of the tank 3 in the bottom view of the vehicle 10 becomes a shape (for example, a triangular shape) that corresponds to the interval between the circular spare tire 7 and the side member 12. That is, the shape of the tank 3 is set to correspond to the shape of the space interposed between the spare tire 7 and the side member 12. By utilizing the dead space, it is easy to sufficiently ensure the capacity of the tank 3. Since the tank 3 is provided at a position that is relatively closer to the exhaust pipe 24, for example, the freezing of the aqueous urea solution or an increase in viscosity in the extremely cold environment are suppressed.

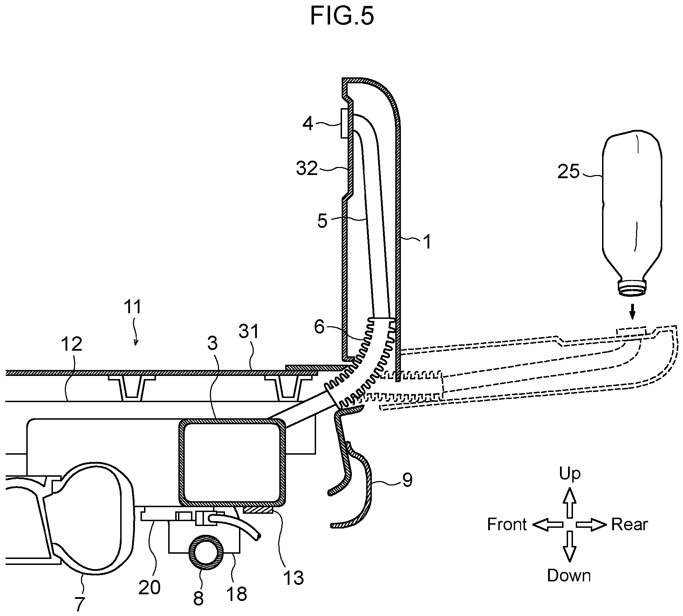

The bumper 9 is disposed at a predetermined interval to the rear surface of the tank 3. As illustrated in Fig. 5, the height of the bottom surface of the tank 3 is set above the bottom surface of the spare tire 7 and above the lower end side of the bumper 9. Thus, the tank 3 is in a state of being surrounded by the spare tire 7, the bumper 9 and the side members 12, thereby improving the protection of the tank 3.

A supply module 20 is mounted on the bottom surface side of the tank 3. The supply module 20 is a component obtained by combining various devices for supplying the aqueous urea solution stored in the tank 3 to the exhaust system (for example, a urea water injector provided on the exhaust passage), and is attached by passing through the bottom surface of the tank 3. In the supply module 20, a pump for pumping the urea water to the urea water injector, a heater for heating the urea water to a suitable temperature, a filter for removing foreign substances in the urea water, a temperature sensor for detecting the temperature of the urea water, a residual quantity sensor for detecting the tank residual quantity of urea water and the like are equipped. Therefore, a pump, a piping material through which the urea water flows, an electric wiring for driving the heater, a signal line for transmitting the detection signals of the various sensors and the like are connected to the supply module 20. In the present embodiment, the layout of the supply module 20 and the guard bar 8 are set such that the pump of the supply module 20 is disposed just above the guard bar 8. As a result, the protection of the pump is improved.

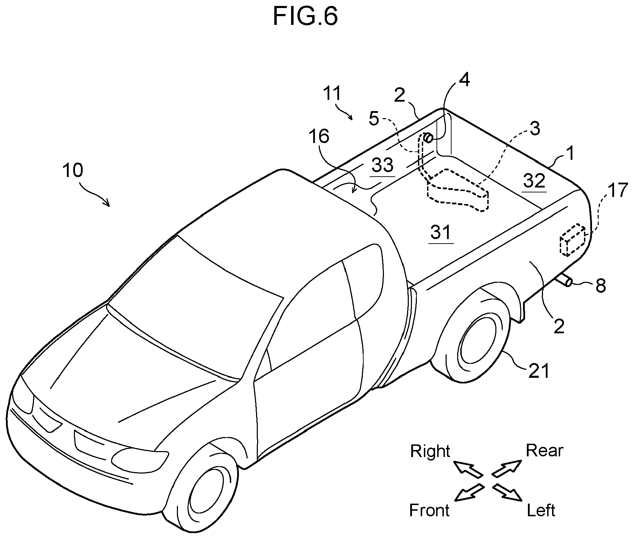

As illustrated in Fig. 1, the rear gate 1 is erected (or stands) from the floor surface 31 at the rear end of the platform 11, and the side gates 2 are erected at the left and right side ends of the platform 11. A urea water injection port 4 (water injection port) for replenishing the aqueous urea solution to the tank 3 is provided on the rear gate 1 or the side gate 2. Figs. 1 and 5 illustrate a configuration of a case where the urea water injection port 4 is provided on the rear gate 1, and Fig. 6 illustrates a configuration of a case where the urea water injection port 4 is provided on the side gate 2. The urea water injection port 4 is preferably provided on one of the side surfaces 32 and 33 that face the inside of the platform 11 in the gates 1 and 2 so as to face the inside of the platform 11. (The urea water injection port 4 is provided on a surface 32 or 33 facing the inside of the platform, of the surface of the gate 1 or 2). As a result, the appearance of the vehicle 10 is improved, and appearance marketability is improved.

The water injection pipe 5 is connected between the urea water injection port 4 and the tank 3. The urea water injection port 4 is connected to be in a state of communicating with the interior of the tank via the water injection pipe 5, and is normally sealed with a cap. When replenishing the aqueous urea solution, the cap is removed, and the aqueous urea solution is replenished from a refill bottle 25 of the aqueous urea solution. Further, the water injection pipe 5 is a hollow pipe (for example, a pipe and a hose) for replenishing the aqueous urea solution to the interior of the tank 3.

The gates 1 and 2 provided with the urea water injection port 4 are preferably provided to freely swing with respect to the floor surface 31 of the platform 11 such that the gates 1 and 2 can be inclined toward the outside or the inside of the platform 11. In this case, for example, as illustrated in Fig. 5, by providing a universal joint 6 which is bent in accordance with the swinging of the rear gate 1 in the water injection pipe 5, the communication of the injection pipe 5 is ensured. A specific structure of the universal joint 6 is arbitrary. For example, such structure may be the pipe wall formed in a bellows shape or a tubular shape made of a flexible material (for example, rubber, resin or the like).

As illustrated by the broken line in Fig. 5, the water injection pipe 5 is preferably routed inside the rear gate 1 so as to be sloped downward toward the tank 3 in the state of making the inner surface of the rear gate 1 substantially horizontal. That is, in the erected posture of the rear gate 1 (the posture illustrated by the solid line in Fig. 5), it is preferable to set the arrangement state of the water injection pipe 5 so as to be inclined to the outside of the vehicle 10 as it extends from the urea water injection port 4 to the downstream side of the water injection pipe 5. Thus, regardless of the magnitude of the inclination angle of the rear gate 1, even in a case where the rear gate 1 is in the substantially horizontal posture, the aqueous urea solution easily flows down to the tank 3 by its own weight, and the replenishing workability is further improved.

For example, as illustrated in Fig. 1, to further improve the replenishing workability, an angle adjusting mechanism 17 (gate lock) for holding the swinging angle of the gates 1 and 2 at an arbitrary angle may be provided. In this case, it is conceivable to incorporate a locking device for restraining the rotation by interposing the swinging central axis, in the vicinity of the swinging center axis of the rear gate 1. The swinging angle of the gates 1 and 2 fixed by the locking device, for example, may be an angle at which the floor surface 31 of the platform 11 and the inner surface of the gate 1 or 2 have a substantially plane shape, and may be an angle at which the inner surfaces of the gate 1 or 2 slightly slope downward toward the inside of the platform 11. By operating the locking device, the operation area as a scaffold on the platform 11 is expanded, and the replenishing workability is improved. In addition, there is no fear of windage of the rear gate 1 due to a wind pressure, and the stability of the replenishing operation is improved.

### [2. Working and Effect]

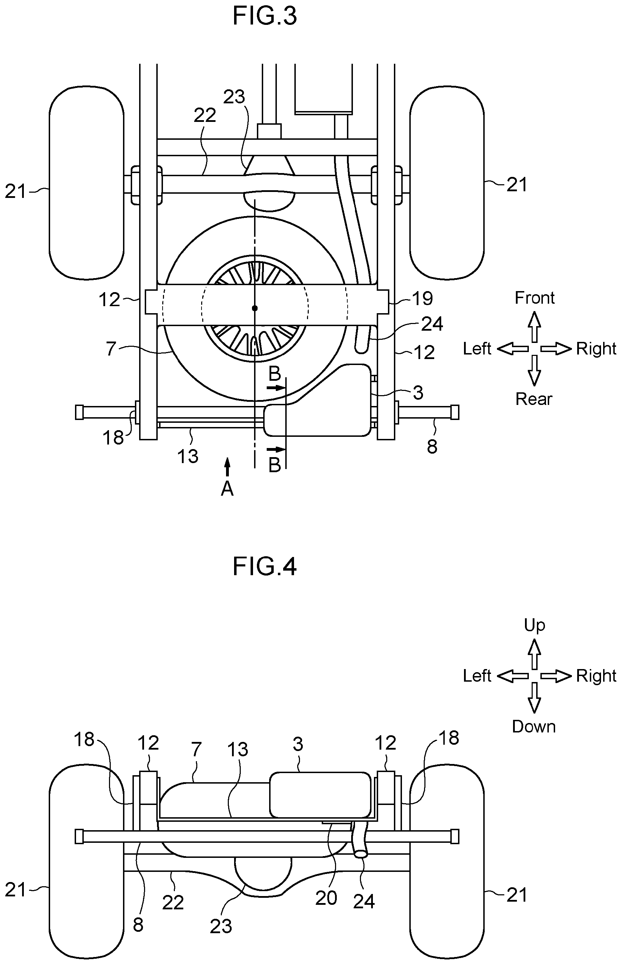

(1) In the aforementioned vehicle body structure, the tank 3 is disposed below the floor surface 31 of the platform 11, and the urea water injection port 4 is provided on the rear gate 1 or the side gate 2. Thus, because the position of the urea water injection port 4 is located a height that easily injects the aqueous urea solution, it is possible to improve the workability when replenishing the aqueous urea solution. Further, because the tank 3 itself is disposed below the floor surface 31 of the platform 11, the tank 3 can be disposed using the lower space of the vehicle body, and it is possible to save a space. Furthermore, for example, because the distance between the tank 3 and the urea water injection port 4 is relatively long as compared to the structure as described in Patent Literature 4, it is possible to reduce the exposure risk to the urea water vapor during replenishing operation, and an operator can comfortably perform the replenishing operation.
(2) As illustrated in Figs. 1 and 5, when the urea water injection port 4 is provided on the inner side of the gates 1 and 2 that is not visible from the exterior of the vehicle 10, it is possible to improve the appearance (to make a good-looking appearance) of the vehicle 10, thereby improving the appearance marketability (value of commodity). In addition, because it is possible to access to the urea water injection port 4 from the top of the platform 11, it is possible to easily replenish the aqueous urea solution even in a state of stopping the vehicle 10 in a narrow space (for example, within the box-shaped garage), thereby improving the replenishing workability.
   Meanwhile, when the urea water injection port 4 is provided outside the gate 1 or 2, it is possible to replenish the aqueous urea solution even when luggage on the platform 11 is stacked in close proximity to the inner surfaces of the gate 1 or 2, and it is possible to improve the replenishing workability.
(3) When the urea water injection port 4 is provided in the gates 1 and 2 provided to swing freely, it is preferable to provide a universal joint 6 at a position corresponding to the swinging positions of the gates 1 and 2. Thus, it is possible to ensure the communication of the water injection pipe 5. Further, by making the gates 1 and 2 swing freely, in a posture of pushing over the gates 1 and 2 so that the floor surface 31 of the platform 11 and the inner surface of the gate 1 or 2 have a substantially plane shape, the replenishing operation of the aqueous urea solution can be performed, and it is possible to perform the replenishing operation from the outside of the vehicle 10 as well as from the top of the platform 11. Further, it is possible to perform the replenishing operation even in a state of loading the luggage on the platform 11, thereby further improving the workability.
(4) Further, when providing the angle adjusting mechanism 17 that holds the swinging angle of the gates 1 and 2 formed with the urea water injection port 4, it is possible to perform the replenishing operation at an arbitrary angle (for example, an angle at which the aqueous urea solution easily flows), thereby improving the workability.
(5) As illustrated in Fig. 5, as long as the arrangement state of the water injection pipe 5 is set so that the water injection path becomes a downward slope toward the tank 3 when the inner surface of the rear gate 1 is substantially horizontal, the aqueous urea solution can vigorously flow down to the tank 3 by its own weight, thereby improving the replenishing workability.
(6) As illustrated in Figs. 1 and 5, when providing the urea water injection port 4 on the side surface 32 of the rear gate 1, it is possible to perform the replenishing operation from the rear of the vehicle 10, thereby improving the workability. In addition, it is possible to make the component and the layout of the tank 3 or the urea water injection port 4 common in vehicle types in which the length of the platform 11 is different.
(7) Meanwhile, as illustrated in Fig. 6, when the urea water injection port 4 is provided on the side surface 33 of the side gate 2, it is possible to perform the replenishing operation from the side surface of the vehicle 10, thereby improving the workability. Further, it is possible to make the component and the layout of the tank 3 or the urea water injection port 4 common in the vehicle types in which the width of the platform 11 is different.
(8) Further, in the aforementioned vehicle body structure, the tank 3 is disposed behind (at the rear of) the spare tire 7 and above the guard bar 8. In this way, by disposing the tank 3 in a space surrounded by the spare tire 7 and the guard bar 8, it is possible to reduce the possibility of chipping from the road surface or the contact with the road surface, and it is possible to effectively utilize the free space. Accordingly, it is possible to enhance the protection of the tank 3, while saving the space. Furthermore, because the guard bar 8 is disposed below the tank 3, it is possible to prevent the contact between the bottom surface of the tank 3 and the road surface at the time of running on a step or a rough road. Accordingly, it is possible to enhance the protection of the tank 3, while saving the space.
   In particular, because the spare tire 7 is in front of the tank 3, when an external force (such as a rear collision load or a rear-end collision load) is applied from the rear, it is possible to elastically support the tank 3 with the spare tire 7. Further, if the tank 3 is laid out on the spare tire 7 (for example, see Patent Literature 3), because it is difficult to ensure the dimension in the height direction of the tank 3, in some cases, the accuracy of the residual quantity of the tank detected by the residual quantity sensor decreases, or the detection itself may not be performed. In contrast, if the tank 3 is laid out behind (at the rear of) the spare tire 7, because it is possible to ensure a dimension in the height direction of the tank 3, it is possible to improve the accuracy of the tank residual quantity detected by the residual quantity sensor.
(9) As illustrated in Fig. 1, in the aforementioned vehicle body structure, the guard bar 8 is provided behind (at the rear of) and below the tank 3. Thus, it is possible to more reliably prevent the contact between the bottom surface of the tank 3 and the road surface at the time of running on a step or a rough road, and it is possible to enhance the protection of the tank 3. Further, because the guard bar 8 is disposed behind (at the rear of) the spare tire 7, even if an external force (a rear collision load or a rear-end collision load) acts from the rear of the vehicle 10, it is possible to protect the spare tire 7 with the guard bar 8.
(10) As illustrated in Fig. 3, the tank 3 is supported by the side member 12 via the tank bracket 13. Accordingly, as compared to the case of fixing the tank 3 to the outer panel or the inner panel, the support state of the tank 3 can be set firmly. In addition, because the tank bracket 13 is disposed behind (at the rear of) the spare tire 7, a structure in which the tank bracket 13 is hardly influenced by the external force from the side and the front of the vehicle 10 and is hardly detached from the side member 12 is provided. Therefore, it is possible to more reliably hold the support state of the tank 3, and it is possible to enhance the protection of the tank 3.
(11) As illustrated in Figs. 2 and 5, the bumper 9 is provided behind (at the rear of) the guard bar 8, and the tank 3 is disposed above the bottom surface of the bumper 9. Thus, it is possible to more reliably prevent the contact between the bottom surface of the tank 3 and the road surface at the time of running on a step or a rough road, and it is possible to enhance the protection of the tank 3. Further, since the bottom surface of the bumper 9 is disposed above the guard bar 8, even when a large load such as deformation of the guard bar 8 is applied from the lower side of the vehicle 10, the load is supported by the bottom surface of the bumper 9, and is not transmitted to the tank 3. Accordingly, it is possible to further improve the protection of the tank 3.
(12) As illustrated in Figs. 2 and 3, the tank 3 is disposed in the vicinity of the exhaust pipe 24. Thus, it is possible to warm the aqueous urea solution around the pump by the exhaust heat. Accordingly, it is possible to reliably operate the pump even in an extremely cold region. Further, because the aqueous urea solution is supplied to the exhaust system, it is possible to shorten the piping length from the supply module 20 to the urea water injector.

### [3. Modified Example]

Although the layout of the tank 3 in the vehicle 10 of the separate frame structure has been described in the aforementioned embodiment, it is also possible to apply the layout of the tank 3 to a monocoque vehicle. For example, in a vehicle having a platform mounted on the frame of the monocoque body, the urea water injection port 4 is provided in the gate erected along the periphery of the platform, and the tank 3 is provided below the floor panel. By such a vehicle body structure, the same effects as the aforementioned embodiment can be exhibited.

Further, as illustrated in Fig. 2, although the aforementioned embodiment illustrates the vehicle 10 in which the spare tire 7 is disposed to be biased to the left side of the vehicle 10, the position of the spare tire 7 in the vehicle width direction can be arbitrarily set. Further, the same also applies to the shape and the arrangement of the tank 3, and for example, a target shape in the left-right direction as viewed in a bottom view may be provided, and the tank 3 may be disposed to be biased to the left side of the vehicle body center line C of the vehicle 10.

Further, although the aforementioned embodiment illustrates the vehicle 10 in which a single guard bar 8 is provided, the number of guard bars 8 is arbitrary. For example, a plurality of guard bars 8 may be disposed in parallel in the front-rear direction in accordance with the size of the tank 3 (the dimension in the front-rear direction). By increasing the number of guard bars 8, it is possible to further enhance the protection of the tank 3.

The invention thus described, it will be obvious that the same may be varied in many ways. Such variations are not to be regarded as a departure from the scope of the invention, and all such modifications as would be obvious to one skilled in the art are intended to be included within the scope of the following claims.

### REFERENCE SIGNS LIST

- 1: rear gate (gate)
- 2: side gate (gate)
- 3: tank
- 4: urea water injection port (water injection port)
- 5: water injection pipe
- 6: universal joint
- 7: spare tire
- 8: guard bar
- 9: bumper
- 10: vehicle
- 11: platform
- 12: side member
- 13: tank bracket
- 16: wheel house
- 17: angle adjusting mechanism (gate lock)
- 18: guard bar bracket
- 19: spare tire bracket
- 20: supply module
- 21: rear wheel
- 22: axle
- 23: differential device
- 24: exhaust pipe
- 25: refill bottle
- 31: floor surface of platform 11
- 32: inner surface of rear gate 1
- 33: inner surface of side gate 2
- C: vehicle body center line

## Claims

1. A vehicle body structure comprising:
a gate (1, 2) that is erected along a periphery of a platform (11) placed on a frame of a vehicle (10);
a tank (3) that is disposed below a floor surface (31) of the platform (11) and adapted to store an additive for purification of exhaust from the vehicle (10); and
a water injection port (4) that is provided on a side surface (32, 33) of the gate (1, 2) and is connected in a state of communicating with the interior of the tank (3),
**characterized by** further comprising:
a water injection pipe (5) that is routed in the interior of the gate (1, 2) to connect the water injection port (4) and the tank (3),
wherein
the gate (1, 2) is provided to freely swing with respect to the floor surface (31) of the platform (11) between horizontal posture and erected posture,
the water injection pipe (5) has a universal joint (6) that is bent in accordance with the swinging of the gate (1, 2), and
the water injection pipe (5) is routed in the interior of the gate (1, 2) so as to be inclined toward the outside of the vehicle (10) as the water injection pipe (5) extends from the water injection port (4) to a downstream side of the water injection pipe (5) in an erected posture of the gate (1, 2).

2. The vehicle body structure according to claim 1, **characterized in that** the side surface (32, 33) where the water injection port (4) is provided is a side surface facing the inside of the platform in the gate (1, 2).

3. The vehicle body structure according to claim 1 or 2, further comprising:
an angle adjusting mechanism (17) that holds a swinging angle of the gate (1,2).

4. The vehicle body structure according to any one of claims 1 to 3, **characterized in that** the gate (1, 2) is a rear gate (1) located at the rear of the vehicle (10).

5. The vehicle body structure of any one of claims 1 to 4, **characterized in that** the gate (1, 2) is a side gate (2) located on the side of the vehicle (10).

## Patentansprüche

1. Fahrzeugaufbaustruktur, die Folgendes umfasst:
eine Bordwand (1, 2), die entlang eines Umfangs einer Ladefläche (11) aufgerichtet ist, die auf einem Rahmen eines Fahrzeugs (10) platziert ist;
einen Tank (3), der unter einer Bodenfläche (31) der Ladefläche (11) angeordnet ist und angepasst ist, einen Zusatzstoff für die Reinigung von Abgas von dem Fahrzeug (10) zu lagern; und
eine Wassereinspritzöffnung (4), die auf einer Seitenfläche (32, 33) der Bordwand (1, 2) bereitgestellt ist und in einem verbundenen Zustand mit dem Inneren des Tanks (3) verbunden ist,
**dadurch gekennzeichnet, dass** sie ferner Folgendes umfasst:
ein Wassereinspritzrohr (5), das im Inneren der Bordwand (1, 2) geführt ist, um die Wassereinspritzöffnung (4) und den Tank (3) zu verbinden,
wobei
die Bordwand (1, 2) bereitgestellt ist, um in Bezug zur Bodenfläche (31) der Ladefläche (11) zwischen der horizontalen Stellung und der aufgerichteten Stellung frei zu schwingen,
das Wassereinspritzrohr (5) eine Gelenkverbindung (6) aufweist, die gemäß dem Schwingen der Bordwand (1, 2) gebogen wird, und
das Wassereinspritzrohr (5) im Inneren der Bordwand (1, 2) geführt ist, um in Richtung der Außenseite des Fahrzeugs (10) geneigt zu sein, wenn das Wassereinspritzrohr (5) sich in einer aufgerichteten Stellung der Bordwand (1, 2) von der Wassereinspritzöffnung (4) zu einer nachgeschalteten Seite des Wassereinspritzrohrs (5) erstreckt.

2. Fahrzeugaufbaustruktur nach Anspruch 1, **dadurch gekennzeichnet, dass** die Seitenfläche (32, 33), wo die Wassereinspritzöffnung (4) bereitgestellt ist, eine Seitenfläche ist, die der Innenseite der Ladefläche in der Bordwand (1, 2) zugewandt ist.

3. Fahrzeugaufbaustruktur nach Anspruch 1 oder 2, die ferner Folgendes umfasst:
einen Winkeleinstellungsmechanismus (17), der einen Schwingwinkel der Bordwand (1, 2) hält.

4. Fahrzeugaufbaustruktur nach einem der Ansprüche 1 bis 3, **dadurch gekennzeichnet, dass** die Bordwand (1, 2) eine hintere Bordwand (1) ist, die sich am Heck des Fahrzeugs (10) befindet.

5. Fahrzeugaufbaustruktur nach einem der Ansprüche 1 bis 4, **dadurch gekennzeichnet, dass** die Bordwand (1, 2) eine Seitenbordwand (2) ist, die sich an der Seite des Fahrzeugs (10) befindet.

## Revendications

1. Structure de carrosserie de véhicule comprenant :
une porte (1, 2) qui est installée le long d'une périphérie d'une plateforme (11) placée sur un bâti d'un véhicule (10) ;
un réservoir (3) qui est disposé au-dessous d'une surface de plancher (31) de la plateforme (11) et adapté pour stocker un additif pour la purification de l'échappement du véhicule (10) ; et
un orifice d'injection d'eau (4) qui est prévu sur une surface latérale (32, 33) de la porte (1, 2) et est raccordé, dans un état de communication, avec l'intérieur du réservoir (3),
**caractérisée en ce qu'**elle comprend en outre :
un tuyau d'injection d'eau (5) qui est acheminé dans l'intérieur de la porte (1, 2) pour raccorder l'orifice d'injection d'eau (4) et le réservoir (3),
dans laquelle :
la porte (1, 2) est prévue pour osciller librement par rapport à la surface de plancher (31) de la plateforme (11) entre une posture horizontale et la posture droite,
le tuyau d'injection d'eau (5) a un joint universel (6) qui est plié selon l'oscillation de la porte (1, 2), et
le tuyau d'injection d'eau (5) est acheminé à l'intérieur de la porte (1, 2) afin d'être incliné vers l'extérieur du véhicule (10) lorsque le tuyau d'injection d'eau (5) s'étend à partir de l'orifice d'injection d'eau (4) jusqu'à un côté en aval du tuyau d'injection d'eau (5) dans une posture droite de la porte (1, 2).

2. Structure de carrosserie de véhicule selon la revendication 1, **caractérisée en ce que** la surface latérale (32, 33) où l'orifice d'injection d'eau (4) est prévu, est une surface latérale faisant face à l'intérieur de la plateforme dans la porte (1, 2).

3. Structure de carrosserie de véhicule selon la revendication 1 ou 2, comprenant en outre :
un mécanisme d'ajustement d'angle (17) qui contient un angle d'oscillation de la porte (1, 2).

4. Structure de carrosserie de véhicule selon l'une quelconque des revendications 1 à 3, **caractérisée en ce que** la porte (1, 2) est une porte arrière (1) positionnée à l'arrière du véhicule (10).

5. Structure de carrosserie de véhicule selon l'une quelconque des revendications 1 à 4, **caractérisée en ce que** la porte (1, 2) est une porte latérale (2) positionnée sur le côté du véhicule (10).
